# EUROPÄISCHE PATENTSCHRIFT

(11) **EP 3 017 495 B1**
(45) Veröffentlichungstag und Bekanntmachung des Hinweises auf die Patenterteilung: **07.08.2019**
(21) Anmeldenummer: 14733578.0
(22) Anmeldetag: 17.06.2014
(51) Int. Cl.: H01M 10/39, H01M 10/615, H01M 10/633, H02J 3/32, H02J 7/34, H02J 3/38

(54) **ENERGIESPEICHERVORRICHTUNG UND VERFAHREN ZUM BETREIBEN EINER HOCHTEMPERATURBATTERIE**
ENERGY STORAGE DEVICE AND METHOD FOR OPERATING A HIGH-TEMPERATURE BATTERY
DISPOSITIF DE STOCKAGE D'ÉNERGIE ET PROCÉDÉ DE FONCTIONNEMENT D'UNE BATTERIE À HAUTE TEMPÉRATURE

(30) Priorität: 03.07.2013 DE 102013212931
(43) Veröffentlichungstag der Anmeldung: 11.05.2016
(73) Patentinhaber: Robert Bosch GmbH, 70442 Stuttgart (DE)
(72) Erfinder: GEROVASILI, Eirini, 70825 Korntal-Muenchingen (DE); PREISSNER, Marcus, 71665 Vaihingen (DE); MAY, Johanna, 72076 Tuebingen (DE)
(86) Internationale Anmeldenummer: PCT/EP2014/062612
(87) Internationale Veröffentlichungsnummer: WO 2015/000683

(56) Entgegenhaltungen:
- EP-A1- 2 157 654
- JP-A- 2004 111 123
- JP-A- 2004 208 426
- JP-A- 2006 158 148
- US-A1- 2012 217 933

## Beschreibung

### Stand der Technik

Die vorliegende Erfindung bezieht sich auf Verfahren zum Betreiben einer Hochtemperaturbatterie an einer Leistungsquelle. Ferner bezieht sich die Erfindung auf eine Steuervorrichtung für eine Hochtemperaturbatterie und eine Energiespeichervorrichtung mit einer Hochtemperaturbatterie und einer derartigen Steuervorrichtung.

In der letzten Zeit ist es aufgrund rasch fallender Kosten für die Stromerzeugung mit Photovoltaik-Dachanlagen als Leistungsquelle für Haushalte attraktiver geworden, selbsterzeugten Strom zu verbrauchen. Der Eigenverbrauch von Photovoltaikstrom über Zeiten gleichzeitiger Erzeugung und Nutzung hinaus erfordert dabei eine Energiespeichervorrichtung mit hoher Zykluslebensdauer. Unter diesem Gesichtspunkt kommen Hochtemperaturbatterien für die Speicherung von Sonnenenergie infrage. Im Folgenden sollen die Erfindung und ihr Hintergrund ohne Beschränkung der Allgemeinheit am Beispiel von Hochtemperaturbatterien des NaNiCl-Typs beschrieben werden. Die Erfindung ist jedoch gleichermaßen auf beliebige andere Typen von Hochtemperaturbatterien wie NaS-, NaFeCl-, NaCuCl- und Lithium-Hochtemperaturbatterien anwendbar.

Die US 2012/0217933 A1 zeigt eine Steuerungsvorrichtung für eine Sekundärbatterie und ein Steuerverfahren für eine Sekundärbatterie

Die Reaktanten einer NaNiCl-Hochtemperaturbatterie sind Natriumchlorid, mit einer flüssigen Salzlösung aus Nickelchlorid und Natriumchlorid durchtränktes gesintertes Nickel als positive Elektrode, und durch einen Separator getrennt im Außenbereich flüssiges Natrium als negative Elektrode. Die NaNiCl-Hochtemperaturbatterie weist eine theoretische Betriebstemperatur von 157 °C auf, die durch den Schmelzpunkt der Elektrolytflüssigkeit bestimmt ist, die die Beweglichkeit der Natriumionen in der positiven Elektrode gewährleistet. Die lonenleitfähigkeit des Separators und der Elektrolytflüssigkeit nimmt allerdings erst bei Temperaturen über einer minimalen Betriebstemperatur von 240 °C einen hinreichend hohen Wert an. Aus diesem Grunde wird üblicherweise die interne Temperatur einer NaNiCl-Hochtemperaturbatterie mittels eines Temperatursensors laufend überwacht, um eine interne Heizung einzuschalten, wenn die Innentemperatur unter die minimale Betriebstemperatur abfällt. So offenbart die DE 10 2007 052 163 A1 ein Verfahren zur Regelung der Temperatur von wenigstens zwei zu einer Anordnung zusammengefassten Hochtemperaturbatterien, bei dem die Hochtemperaturbatterien selektiv erwärmt werden und die Temperatur der selektiv erwärmten Hochtemperaturbatterien auf einer bestimmten Temperatur konstant geregelt wird. Um Wärmeverluste klein zu halten, werden Hochtemperaturbatterien in der Regel in einen wärmeisolierten Batteriekasten eingebaut. Im Betrieb fließt aus dem Batterieinneren sowohl durch die wärmeisolierte Wandung des Batteriekastens als auch durch Zuleitungen ständig Wärme ab, wobei die pro Zeiteinheit abfließende Wärmemenge annähernd linear von der Differenz zwischen der Innentemperatur der Batterie und der Umgebungstemperatur abhängt. Wird die gespeicherte Energie der Batterie selbst verwendet, um die Hochtemperaturbatterie auf der minimalen Betriebstemperatur zu halten, erfordert dies bei einer Batterie mit einer Speicherkapazität von 20 kWh und Vakuumisolierung einen Anteil von etwa 10% der Speicherkapazität pro Tag. Es ist wünschenswert, den für die Batterieheizung benötigten Anteil der Speicherkapazität zu senken, um einen möglichst großen Anteil der Speicherkapazität für Nutzanwendungen zur Verfügung stellen zu können.

### Offenbarung der Erfindung

Dementsprechend wird ein Verfahren zum Betreiben einer Hochtemperaturbatterie an einer Leistungsquelle nach Anspruch 1 bereitgestellt, gemäß welchem zunächst eine gegenwärtige Quellenleistung der Leistungsquelle ermittelt wird. Die Leistungsquelle kann eine grundsätzlich beliebig definierte Quelle elektrischer Leistung mit zeitlich nicht konstanter Quellenleistung sein, z.B. eine Energieerzeugungsanlage wie eine Photovoltaikanlage oder ein Windkraftwerk sein, deren abgegebene elektrische Leistung gewöhnlich nicht in zeitlich konstanter Höhe zur Verfügung steht. Die Leistungsquelle kann auch z. B. ein öffentliches oder nichtöffentliches Energienetz sein, insbesondere wenn dieses elektrische Leistung nicht in zeitlich konstanter Höhe oder zu zeitlich konstanten Bedingungen zur Verfügung stellt. Als Quellenleistung einer Leistungsquelle im Sinne der Erfindung kann ferner auch eine Nettoleistung aufgefasst werden, die durch Subtraktion einer z.B. an einen Verbraucher abgegebenen Leistung von einer z. B. von einem Kraftwerk o. Ä. bereitgestellten elektrischen Leistung definiert ist.

In einem weiteren Verfahrensschritt wird eine Ladeleistung der Hochtemperaturbatterie ermittelt. Unter der Ladeleistung ist ein Wert zu verstehen, der die beim elektrischen Laden der Hochtemperaturbatterie in ihrem gegenwärtigen Ladezustand aufgenommene elektrische Leistung charakterisiert, unabhängig davon, ob ein Laden der Hochtemperaturbatterie während dieses Verfahrensschritts tatsächlich gerade durchgeführt wird. Beispielsweise kann das Ermitteln der Ladeleistung direkt erfolgen, indem ein elektrischer Ladestrom und eine elektrische Ladespannung beim Laden der Hochtemperaturbatterie gemessen und miteinander multipliziert werden, oder auch indirekt erfolgen, indem ein Ladezustand der Hochtemperaturbatterie ermittelt und aus diesem eine im gegenwärtigen Ladezustand zu erwartende Ladeleistung bestimmt wird.

In einem weiteren Schritt wird die gegenwärtige Quellenleistung mit der Ladeleistung verglichen. Wenn die gegenwärtige Quellenleistung höher als die Ladeleistung ist, wird die Hochtemperaturbatterie geheizt.

Erfindungsgemäß wird die Quellenleistung, die in elektrischer Form nicht mehr von der Hochtemperaturbatterie aufgenommen werden kann bzw. soll, zum Heizen der Batterie verwendet.

Die Erfindung betrifft außerdem eine Energiespeichervorrichtung gemäß Anspruch 7.

Unter weiteren Gesichtspunkten werden ein Computerprogrammprodukt zur Durchführung des Verfahrens und eine Steuervorrichtung für eine Hochtemperaturbatterie offenbart.

### Vorteile der Erfindung

Das erfindungsgemäße Heizen der Hochtemperaturbatterie in dem Falle, dass die gegenwärtige Quellenleistung größer als die Ladeleistung ist, ermöglicht es, beim Betrieb der Hochtemperaturbatterie an einer elektrischen Leistungsquelle zunächst die von der Leistungsquelle gelieferte elektrische Leistung zum elektrischen Aufladen der Hochtemperaturbatterie zu verwenden, insoweit die Hochtemperaturbatterie in der Lage ist, diese Leistung in einem elektrischen Ladevorgang aufzunehmen, um darüber hinaus von der Leistungsquelle gelieferte elektrische Leistung, die in elektrischer Form nicht mehr von der Hochtemperaturbatterie aufgenommen werden kann bzw. soll, zum Heizen der Batterie zu verwenden. Auf diese Weise wird der Hochtemperaturbatterie eine insgesamt größere Leistung zugeführt, als sie in elektrischer Form aufzunehmen in der Lage ist. Insbesondere wird der Hochtemperaturbatterie auch dann noch weitere Energie der Leistungsquelle zugeführt, wenn die elektrische Ladekapazität der Hochtemperaturbatterie bereits ausgeschöpft ist, d.h. die Hochtemperaturbatterie die maximal elektrisch speicherbare Energie bereits aufgenommen hat.

Durch das Heizen erhöht sich die Temperatur der Hochtemperaturbatterie über die zum elektrischen Lade- und Entladebetrieb erforderliche Mindestbetriebstemperatur hinaus, sodass verglichen mit einer herkömmlichen Betriebsart, bei welcher die Hochtemperaturbatterie konstant auf der Mindestbetriebstemperatur gehalten wird, eine größere Energiemenge in der Hochtemperaturbatterie gespeichert wird. Diese größere Energiemenge setzt sich zusammen aus einem elektrisch gespeicherten Anteil, welcher der maximal elektrisch in der Hochtemperaturbatterie speicherbaren Energie entspricht, und einem thermisch gespeicherten Anteil, welcher der Wärmekapazität der Hochtemperaturbatterie multipliziert mit der Temperaturdifferenz zwischen der gegenwärtigen Temperatur und der Mindestbetriebstemperatur der Hochtemperaturbatterie entspricht. Steht die Leistungsquelle zu einem späteren Zeitpunkt nicht zur Verfügung, braucht die in der Hochtemperaturbatterie elektrisch gespeicherte Energie nicht zum Ausgleich der Wärmeverluste verwendet zu werden, da die Hochtemperaturbatterie abkühlen gelassen werden kann, solange die Temperatur der Hochtemperaturbatterie noch oberhalb der Mindestbetriebstemperatur liegt. Ein entsprechend höherer Anteil der elektrischen Speicherkapazität steht daher für Nutzanwendungen zur Verfügung. Da zudem Hochtemperaturbatterien bei über die Mindestbetriebstemperatur hinaus erhöhten Temperaturen schneller geladen und entladen werden können, ergibt sich als weiterer Vorteil der Erfindung eine insgesamt gesteigerte Leistungsfähigkeit der Hochtemperaturbatterie.

Gemäß einer bevorzugten Weiterentwicklung umfasst das Verfahren ferner einen Schritt des Ermittelns einer gegenwärtigen Temperatur der Hochtemperaturbatterie, einen Schritt des Vergleichens der gegenwärtigen Temperatur mit einer vorbestimmten Mindestbetriebstemperatur der Hochtemperaturbatterie, einen Schritt des Ermittelns eines gegenwärtigen Ladezustands der Hochtemperaturbatterie und einen Schritt des Vergleichens des gegenwärtigen Ladezustands mit einem minimalen erlaubten Ladezustand der Hochtemperaturbatterie. Das Heizen erfolgt hierbei weiterhin dann, wenn der gegenwärtige Ladezustand höher als der minimale erlaubte Ladezustand ist und die gegenwärtige Temperatur niedriger als die Mindestbetriebstemperatur ist. Die Temperatur der Hochtemperaturbatterie kann z.B. eine Elektrolyttemperatur oder eine andere in oder am Inneren der Hochtemperaturbatterie gemessene Temperatur sein. Der Ladezustand stellt ein Maß für die in der Hochtemperaturbatterie gespeicherte Energie dar und kann z.B. ein absoluter Zahlenwert für die Energie, eine Prozentzahl bezogen auf die Batteriekapazität oder eine andere Maßzahl sein, die mit der gespeicherten Energie in einem monoton steigenden, linearen oder nichtlinearen Zusammenhang steht. In einem weiteren Verfahrensschritt wird der gegenwärtige Ladezustand mit einem maximalen Soll-Ladezustand der Hochtemperaturbatterie verglichen. Beispielsweise entspricht der maximale Soll-Ladezustand einer Aufladung der Batterie bis zur vollen Batteriekapazität, kann aber auch auf andere Weise geeignet festgelegt sein, z.B. als 95% der Batteriekapazität, falls eine höhere Aufladung als 95% nicht gewünscht ist. Der minimale erlaubte Ladezustand kann z.B. einer vollständigen Entladung der Hochtemperaturbatterie entsprechen oder geeignet als ein anderer Ladezustand festgelegt sein, unter den die Hochtemperaturbatterie nicht entladen werden soll, um eine Beschädigung zu vermeiden. Diese Weiterentwicklung ermöglicht, die Hochtemperaturbatterie auf mindestens der Mindestbetriebstemperatur zu halten, solange noch in der Hochtemperaturbatterie über den minimalen erlaubten Ladezustand hinaus elektrisch gespeicherte Energie vorhanden ist, sodass diese Energie zur Entnahme für Nutzanwendungen bereitsteht, und andererseits die Hochtemperaturbatterie unter die Mindestbetriebstemperatur abkühlen zu lassen, sobald die Hochtemperaturbatterie keine über den minimalen erlaubten Ladezustand hinaus elektrisch gespeicherte Energie mehr enthält, wodurch auf ein Zuführen externer elektrischer Leistung z.B. eines öffentlichen Stromnetzes mit entsprechen hohem Aufwand und Kosten verzichtet werden kann, ohne dass durch das Abfallen der Temperatur der Hochtemperaturbatterie die Verfügbarkeit von in der Hochtemperaturbatterie elektrisch gespeicherter Energie beeinträchtigt würde.

Vorzugsweise weist das Verfahren außerdem einen Schritt des Vergleichens der gegenwärtigen Temperatur mit einer vorbestimmten Mindestruhetemperatur der Hochtemperaturbatterie auf, wobei das Heizen weiterhin dann erfolgt, wenn die gegenwärtige Temperatur niedriger als die Mindestruhetemperatur ist. Die Mindestruhetemperatur ist z.B. eine geeignet festgelegte Temperatur, unter welche die Hochtemperaturbatterie nicht abkühlen soll, um Beschädigungen zu vermeiden. Dies ermöglicht, in Zeitabschnitten, in denen kein Laden oder Entladen der Hochtemperaturbatterie benötigt wird, das Abkühlen der Hochtemperaturbatterie bis unter die Mindestruhetemperatur zuzulassen, sodass auf das Zuführen externer elektrischer Leistung z.B. eines öffentlichen Stromnetzes mit entsprechen hohem Aufwand und Kosten verzichtet werden kann, ohne die Hochtemperaturbatterie der Gefahr von Beschädigungen auszusetzen, da die Temperatur der Hochtemperaturbatterie in schonender Weise zwischen der Mindestbetriebstemperatur und der Mindestruhetemperatur gehalten wird.

Gemäß einer bevorzugten Weiterentwicklung, bei der das Laden mittels einer Leistungsquelle erfolgt, sind ferner vorgesehen ein Schritt des Vorausbestimmens einer Zeit bis zu einem Leistungsbeginn der Leistungsquelle, ein Schritt des Ermittelns einer zum Heizen der Hochtemperaturbatterie auf die Mindestbetriebstemperatur erforderlichen Vorheizdauer, und ein Schritt des Vergleichens der Vorheizdauer mit der Zeit bis zum Leistungsbeginn. Der Leistungsbeginn kann z.B. präzise auf eine Uhrzeit vorausbestimmt werden, zu welcher die Leistungsquelle planmäßig zu leisten beginnt, oder mit unterschiedlicher Präzision vorhergesagt werden. Dabei erfolgt das Heizen weiterhin dann, wenn die Vorheizdauer kürzer als die Zeit bis zum Leistungsbeginn ist. Dies ermöglicht, bei Leistungsbeginn der Leistungsquelle unverzüglich mit dem Laden der Hochtemperaturbatterie zu beginnen, sodass keine von der Leistungsquelle gelieferte Energie verlorengeht. Vorzugsweise weist die Leistungsquelle einen Licht-Elektrizitäts-Wandler auf, wobei das Vorausbestimmen durch Ermitteln eines Sonnenscheinbeginns auf den Licht-Elektrizitäts-Wandler erfolgt. Dies ermöglicht eine einfache Bestimmung des Leistungsbeginns als z.B. den Sonnenaufgang am Ort des Licht-Elektrizitäts-Wandlers. In ferner bevorzugter Weise umfasst das Ermitteln des Sonnenscheinbeginns ein Zugreifen auf eine Wettervorhersage für einen geographischen Ort des Licht-Elektrizitäts-Wandlers. Dies ermöglicht, z.B. bei bewölktem Himmel unter Energieeinsparung das Vorheizen zu einem späteren Zeitpunkt zu beginnen, als bei Berücksichtigung der Sonnenaufgangszeit allein angemessen wäre.

### Kurze Beschreibung der Zeichnungen

Figur 1 zeigt ein Blockdiagramm einer Energiespeichervorrichtung gemäß einer Ausführungsform der Erfindung, mit einer Hochtemperaturbatterie und einer Steuervorrichtung gemäß einer Ausführungsform;
Figur 2A zeigt ein Flussdiagramm eines Verfahrens zum Betreiben einer Hochtemperaturbatterie, das als Basis zum Verständnis der Erfindung dient;
Figur 2B zeigt ein Flussdiagramm eines Verfahrens zum Betreiben einer Hochtemperaturbatterie gemäß der Erfindung; und
Figur 3 zeigt ein Verlaufsdiagramm von Ladezustand und Temperatur einer Hochtemperaturbatterie bei der Ausführung eines Verfahrens gemäß einer Ausführungsform.

Sofern nicht ausdrücklich anders erwähnt, beziehen sich gleiche Bezugszeichen in den Figuren auf gleiche oder äquivalente Elemente.

### Ausführungsformen der Erfindung

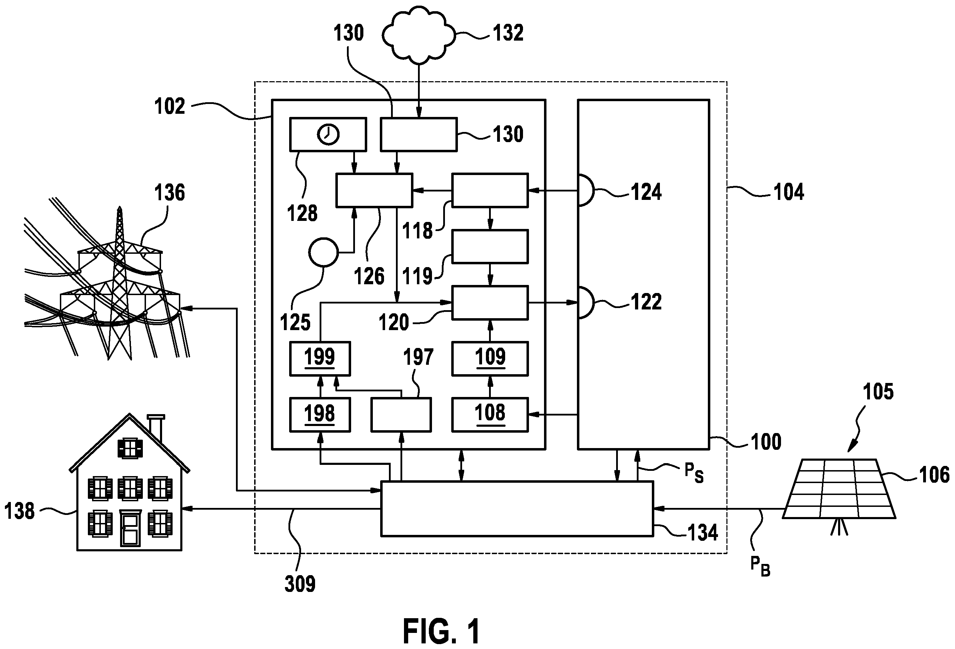

Figur 1 zeigt in schematischer Blockdarstellung eine Energiespeichervorrichtung 104, die verbunden ist mit einem Elektrizitätsnetz 136, mit einem durch z.B. ein Haus gebildeten lokalen Verbraucher 138 elektrischer Verbrauchsleistung 309 und mit einer Leistungsquelle 105, die einen z.B. durch ein Solarzellenpaneel gebildeten Licht-Elektrizitäts-Wandler 106 zur Umwandlung von Sonnenstrahlung in eine elektrische Bruttoleistung P_{B} umfasst.

Die Energiespeichervorrichtung 104 weist eine Hochtemperaturbatterie 100 auf, die hier beispielhaft als eine Hochtemperaturbatterie vom NaNiCl-Typ angenommen werden soll. In alternativen Ausführungsformen kann eine Hochtemperaturbatterie anderen Typs wie z.B. eine NaS- oder Lithium-Hochtemperaturbatterie vorgesehen sein. Außerdem umfasst die Energiespeichervorrichtung 104 eine Steuervorrichtung 102 zum Steuern der Hochtemperaturbatterie 100. Ferner umfasst die Energiespeichervorrichtung 104 eine mit der Hochtemperaturbatterie 100, der Steuervorrichtung 102, dem Elektrizitätsnetz 136, dem lokalen Verbraucher 138 und der Leistungsquelle 105 verbundene Ladesteuerung 134 zum Steuern des Ladezustands der Hochtemperaturbatterie 100 durch Laden, mit elektrischer Ladeleistung Ps, und Entladen. Im Inneren der Hochtemperaturbatterie 100 sind ein Batteriethermometer 124 zum Messen einer inneren Temperatur der Hochtemperaturbatterie 100 und ein Heizelement 122 zum Heizen der Hochtemperaturbatterie 100 angebracht. Die Hochtemperaturbatterie 100 ist durch eine nicht gezeigte Isolierung gegenüber der Umgebung thermisch isoliert.

Die Steuervorrichtung 102 umfasst einen Ladezustandsermittler 108, der mit der Hochtemperaturbatterie 100 elektrisch verbunden und dazu ausgebildet ist, aufgrund einer elektrischen Spannung der Hochtemperaturbatterie 100 einen gegenwärtigen Ladezustand der Hochtemperaturbatterie 100 zu ermitteln, welcher beschreibt, zu welchem Grad die Hochtemperaturbatterie 100 elektrisch aufgeladen ist. Ferner umfasst die Steuervorrichtung 102 einen Ladezustandsvergleicher 109 zum Vergleichen des vom Ladezustandsermittler 108 ermittelten gegenwärtigen Ladezustands mit einem minimalen erlaubten Ladezustand der Hochtemperaturbatterie 100.

Außerdem umfasst die Steuervorrichtung 102 einen Temperaturermittler 118, der mit dem Batteriethermometer 124 verbunden und dazu ausgebildet ist, aufgrund eines vom Batteriethermometer 124 empfangenen Signals die gegenwärtige innere Temperatur der Hochtemperaturbatterie 100 zu ermitteln. Ferner umfasst die Steuervorrichtung 102 einen Temperaturvergleicher 119 zum Vergleichen der vom Temperaturermittler 118 ermittelten gegenwärtigen inneren Temperatur mit einer Mindestruhetemperatur, einer minimalen Betriebstemperatur und einer Höchsttemperatur der Hochtemperaturbatterie 100.

Des Weiteren umfasst die Steuervorrichtung 102 einen Quellenleistungsermittler 198 zum Ermitteln einer gegenwärtigen Quellenleistung der Leistungsquelle 105. Im vorliegenden Fall ist die Quellenleistung definiert als eine Nettoleistung, die gegenüber der Bruttoleistung P_{B} vermindert ist um einen Leistungsverbrauch 309 des lokalen Verbrauchers 138. Die Steuervorrichtung 102 umfasst weiter einen Ladeleistungsermittler 197 zum Ermitteln einer Ladeleistung P_{S} der Hochtemperaturbatterie 100, welche die beim elektrischen Laden der Hochtemperaturbatterie 100 in ihrem gegenwärtigen Ladezustand aufnehmbare elektrische Leistung charakterisiert. Im vorliegenden Falle ist der Ladeleistungsermittler 197 mit der Ladesteuerung 134 verbunden, um die Ladeleistung aufgrund von Informationen über die tatsächlich über die Ladesteuerung 134 an die Hochtemperaturbatterie 100 abgegebene Ladeleistung zu ermitteln. In alternativen Ausführungsformen kann der Ladeleistungsermittler 197 zusätzlich oder alternativ mit dem Ladezustandsermittler 108 verbunden sein, um die Ladeleistung indirekt als einen Wert zu bestimmen, der die im gegenwärtigen Ladezustand von der Hochtemperaturbatterie 100 aufnehmbare Ladeleistung charakterisiert. Die Steuervorrichtung 102 umfasst weiter einen Leistungsvergleicher 199, der mit dem Quellenleistungsermittler 198 und dem Ladeleistungsermittler 197 verbunden ist, um die von diesen bereitgestellten Werte zu vergleichen und ein Vergleichsergebnis bereitzustellen.

Die Steuervorrichtung 102 umfasst ferner eine mit dem Heizelement 122 verbundene Heizsteuerung 120 zum Steuern der inneren Temperatur der Hochtemperaturbatterie 100 mittels des Heizelements 122. Die Heizsteuerung 120 ist mit dem Leistungsvergleicher 199, dem Ladezustandsvergleicher 109 und dem Temperaturvergleicher 119 verbunden und ausgebildet, das Heizelement 122 entsprechend der von diesen erhaltenen Vergleichsergebnisse anzusteuern. Des Weiteren umfasst die Steuervorrichtung 102 einen Vorheizdauerermittler 126, der ebenfalls mit der Heizsteuerung 120 verbunden und dazu ausgebildet ist, eine bis zu einem Leistungsbeginn der Leistungsquelle 105 benötigte Vorheizdauer für die Hochtemperaturbatterie 100 zu ermitteln. Die Steuervorrichtung 102 umfasst außerdem eine Uhr 128, eine Netzwerkschnittstelle 130, die zum Zugriff auf eine aktuelle Wettervorhersage mit einem Netzwerk 132 wie dem Internet verbunden ist, und ein Außenraumthermometer 125 zur Bestimmung der Temperatur der Atmosphäre im Außenraum um die Hochtemperaturbatterie 100. Der Vorheizdauerermittler 126 ist mit dem Temperaturermittler 118, dem Außenraumthermometer 125, der Uhr 128 und der Netzwerkschnittstelle 130 verbunden, um von diesen bereitgestellte Ergebnisse bei der Ermittlung der Vorheizdauer zu berücksichtigen.

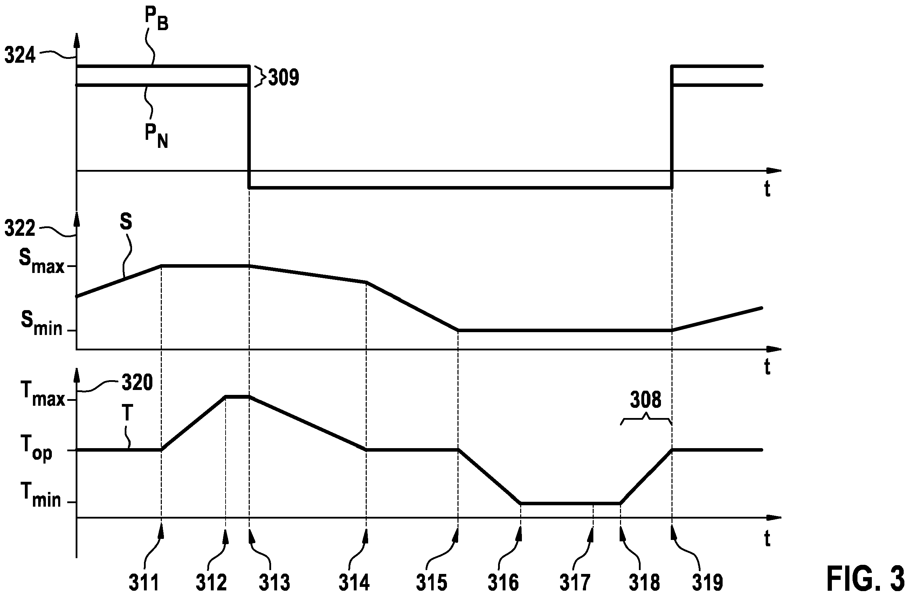

Im Folgenden soll der Betrieb der Energiespeichervorrichtung 104 anhand eines in Figur 3 dargestellten beispielhaften Tagesablaufs beschrieben werden, der sich entlang einer Zeitachse t vom Mittag eines Tages bis zum Mittag des darauffolgenden Tages erstreckt. Figur 3 zeigt drei übereinander angeordnete Graphen, die übereinstimmende waagerechte Zeitachsen t aufweisen. Der oberste Graph stellt mit einer senkrechten Leistungsachse 324 die zeitliche Änderung der von der Leistungsquelle 105 abgegebenen Bruttoleistung P_{B} und einer Nettoleistung P_{N} dar, die gegenüber der Bruttoleistung P_{B} vermindert ist um einen Leistungsverbrauch 309 des lokalen Verbrauchers 138. Der untere Graph stellt mit einer senkrechten Temperaturachse 320 die zeitliche Änderung der inneren Temperatur T der Hochtemperaturbatterie 100 dar, wie sie laufend durch den Temperaturermittler 118 mittels des Batteriethermometers 124 ermittelt wird. Der mittlere Graph stellt mit einer senkrechten Ladezustandsachse 322 die zeitliche Änderung des Ladezustands S der Hochtemperaturbatterie 100 dar, wie er laufend durch den Ladezustandsermittler 108 ermittelt wird.

In dem von den Zeitachsen t in Figur 3 umfassten 24-stündigen Zeitraum vom Mittag eines Tages bis zum Mittag des darauffolgenden Tages ändert sich die Sonneneinstrahlung auf den Licht-Elektrizitäts-Wandler 106 der Leistungsquelle 105, die zu einer entsprechenden Änderung der von der Leistungsquelle 105 erzeugten Bruttoleistung P_{B} führt. Um den Betrieb der Energiespeichervorrichtung 104 verständlich erläutern zu können, ist hier ein vereinfachter, stufenförmiger zeitlicher Verlauf der Bruttoleistung P_{B} dargestellt, gemäß dem die Bruttoleistung P_{B} vom Mittag des ersten Tages bis zum Sonnenuntergang 313 auf einem konstanten Maximalleistungswert verharrt, um mit dem Sonnenuntergang 313 auf Null abzufallen. Am Morgen des zweiten Tages verbleibt die Bruttoleistung P_{B} auch nach Sonnenaufgang 317 zunächst auf Null, wobei beispielhaft eine Wetterentwicklung angenommen werden soll, bei der sich während der Nacht eine dichte Wolkendecke gebildet hat, die die Sonneneinstrahlung auf den Licht-Elektrizitäts-Wandler 106 blockiert. Ein vorliegend beispielhaft angenommenes Auflösen der Wolkendecke zu einem Zeitpunkt 318 zeitlich nach dem Sonnenaufgang 317 führt dazu, dass die Bruttoleistung P_{B} wiederum bis auf den Maximalleistungswert ansteigt, sodass der betreffende Zeitpunkt 318 einen Leistungsbeginn 318 der Leistungsquelle 105 nach einer leistungslosen Phase 313-318 markiert.

Der Einfachheit der Darstellung wegen ist in Figur 3 ferner beispielhaft angenommen, dass der Leistungsverbrauch 309 des lokalen Verbrauchers 138 über den gesamten dargestellten Zeitraum konstant bleibt, sodass die nach Subtraktion des Leistungsverbrauchs 309 verbleibende Nettoleistung P_{N} ebenfalls einen stufenförmigen Verlauf annimmt, wobei sie während der leistungslosen Phase 313-318 der Leistungsquelle 105 einen negativen Wert aufweist. In realen Betriebsabläufen der Energiespeichervorrichtung 104 können sowohl die Bruttoleistung P_{B} als auch der Leistungsverbrauch 309 beliebig komplexe, sich stetig ändernde Verläufe aufweisen. So kann z.B. durchaus der Leistungsverbrauch 309 stets gleich Null sein, in welchem Falle die Nettoleistung P_{N} identisch der Bruttoleistung P_{B} der Leistungsquelle 105 ist.

Zu Beginn des in Figur 3 dargestellten Zeitraums befindet sich die innere Temperatur T der Hochtemperaturbatterie 100 auf dem Niveau der Mindestbetriebstemperatur Tₒₚ, die im vorliegenden Fall einer NaNiCl-Hochtemperaturbatterie als 240 °C festgelegt wurde. Der Ladezustand S der Hochtemperaturbatterie 100 befindet sich auf einem Wert zwischen dem minimalen erlaubten Ladezustand Sₘᵢₙ und einem maximalen Soll-Ladezustand Sₘₐₓ der Hochtemperaturbatterie 100. Der minimale erlaubte Ladezustand Sₘᵢₙ und dem maximale Soll-Ladezustand Sₘₐₓ, die ebenfalls vorab festgelegt wurden, markieren die Grenzen, in denen der Ladezustand S während des Betriebs der Energiespeichervorrichtung 104 verbleiben soll.

Die Heizsteuerung 120 schaltet die Heizung 122 der Hochtemperaturbatterie 100 ein, wenn die gegenwärtige Nettoleistung P_{N} höher ist als die Ladeleistung oder wenn die gegenwärtige Temperatur T niedriger als die Mindestbetriebstemperatur Tₒₚ ist. Im vorliegenden Falle soll davon ausgegangen werden, dass die Nettoleistung P_{N} zu Beginn des in Figur 3 dargestellten Zeitraums die von der Hochtemperaturbatterie aufnehmbare Ladeleistung nicht übersteigt. Auf diese Weise werden unvermeidliche Wärmeverluste der Hochtemperaturbatterie 100 ausgeglichen, sodass die Temperatur T zunächst konstant im Bereich der Mindestbetriebstemperatur Tₒₚ verbleibt. Für das Heizen wird dabei die von der Leistungsquelle 105 gelieferte elektrische Nettoleistung P_{N} verwendet. Wenn die Heizsteuerung 120 die Heizung 122 abgeschaltet hat, steht die Nettoleistung P_{N} zum elektrischen Laden der Hochtemperaturbatterie 100 zur Verfügung, und die Ladesteuerung 134 schaltet elektrisches Laden der Hochtemperaturbatterie mittels der Nettoleistung P_{N} ein. Hierdurch steigt der Ladezustand S allmählich an, bis er zu einem Volladezeitpunkt 311 den maximalen Soll-Ladezustand Sₘₐₓ erreicht. Nun schaltet die Ladesteuerung 134 das elektrische Laden der Hochtemperaturbatterie ab, die elektrische Ladeleistung der Hochtemperaturbatterie 100 fällt auf Null, sodass der Leistungsvergleicher 199 die Heizsteuerung 120 veranlasst die Heizung 122 einzuschalten. Damit wird die Nettoleistung P_{N} statt für das elektrische Laden nunmehr zum Heizen der Hochtemperaturbatterie über die Mindestbetriebstemperatur Tₒₚ hinaus verwendet. Der Temperaturvergleicher 119 vergleicht dabei fortlaufend die Temperatur T mit einer vorab festgelegten Höchsttemperatur Tₘₐₓ der Hochtemperaturbatterie 100. Ist zum Zeitpunkt 312 die Höchsttemperatur Tₘₐₓ erreicht, schaltet die Heizsteuerung 120 die Heizung 122 der Hochtemperaturbatterie 100 ab. Da die Hochtemperaturbatterie 100 weder elektrisch noch thermisch weitere Energie aufnehmen kann, speist die Ladesteuerung 134 die Nettoleistung P_{N} nunmehr in das Energienetz 136 ein. Wenn aufgrund von Wärmeverlusten die Temperatur T unter die Höchsttemperatur Tₘₐₓ fällt, schaltet die Heizsteuerung 120 kurzzeitig die Heizung 122 ein, um die Wärmeverluste auszugleichen und die Temperatur T konstant im Bereich der Höchsttemperatur Tₘₐₓ zu halten.

Nach Sonnenuntergang 313 fällt die Nettoleistung P_{N} auf einen negativen Wert. Da der lokale Verbraucher 138 Leistung 309 aus der Hochtemperaturbatterie 100 entnimmt, sinkt der Ladezustand S ab. Gleichzeitig sinkt die Temperatur T durch Wärmeverluste allmählich ab, während der Temperaturvergleicher 119 fortlaufend die Temperatur T mit der Mindestbetriebstemperatur Tₒₚ vergleicht. Erreicht die Temperatur T zum Zeitpunkt 314 die Mindestbetriebstemperatur Tₒₚ, schaltet die Heizsteuerung 120 die Heizung 122 ein, um so weitere Wärmeverluste auszugleichen und die Temperatur T konstant im Bereich der Mindestbetriebstemperatur Tₒₚ zu halten. Die Energie zum Heizen wird hierbei der elektrischen Ladung der der Hochtemperaturbatterie 100 entnommen, sodass nach dem Zeitpunkt 314 der Ladezustand der Hochtemperaturbatterie 100 rascher abfällt als zuvor. Fortlaufend vergleicht der Ladezustandsvergleicher 108 den Ladezustand S mit dem minimalen erlaubten Ladezustand Sₘᵢₙ.

Ist zum Entladezeitpunkt 315 der minimale erlaubte Ladezustand Sₘᵢₙ erreicht worden, schaltet die Heizsteuerung 120 die Heizung 122 nicht mehr ein, um die Temperatur T auf der Mindestbetriebstemperatur Tₒₚ zu halten. Folglich fällt die Temperatur T weiter ab, während fortlaufend der Temperaturvergleicher 119 die Temperatur T mit einer vorab festgelegten Mindestruhetemperatur Tₘᵢₙ der Hochtemperaturbatterie 100, z.B. der Schmelztemperatur einer Elektrolytflüssigkeit der Hochtemperaturbatterie, wie etwa 157 °C im Falle einer Hochtemperaturbatterie vom NaNiCl-Typ. Erreicht die Temperatur T zum Zeitpunkt 316 die Mindestruhetemperatur Tₘᵢₙ, schaltet die Heizsteuerung 120 die Heizung 122 ein, um so weitere Wärmeverluste auszugleichen und die Temperatur T konstant im Bereich der Mindestruhetemperatur Tₘᵢₙ zu halten. Die Energie zum Heizen wird hierbei dem Energienetz 136 entnommen.

Währenddessen ermittelt der Vorheizdauerermittler 126 fortlaufend einen aktuellen Wert für die Vorheizdauer 308, die zum jeweiligen Zeitpunkt benötigt würde, um die Hochtemperaturbatterie 100 mittels der Heizung 122 auf die Mindestbetriebstemperatur Tₒₚ zu erwärmen. Die Uhr 128 und die Netzschnittstelle 132 stellen einen prognostizierten Leistungsbeginn 319 bereit, zu dem zu erwarten ist, dass wieder eine positive Nettoleistung P_{B} zur Verfügung stehen wird. Die Heizsteuerung 120 schaltet die Heizung 122 zu einem Vorheizzeitpunkt 318 ein, der um die Vorheizdauer 308 vor dem prognostizierten Leistungsbeginn 319 liegt. Auf diese Weise erreicht die Hochtemperaturbatterie 100 zum Leistungsbeginn 319 die Mindestbetriebstemperatur Tₒₚ, sodass sie in der Lage ist, die dann zur Verfügung stehende Nettoleistung P_{B} zur Speicherung elektrischer Energie zu verwenden.

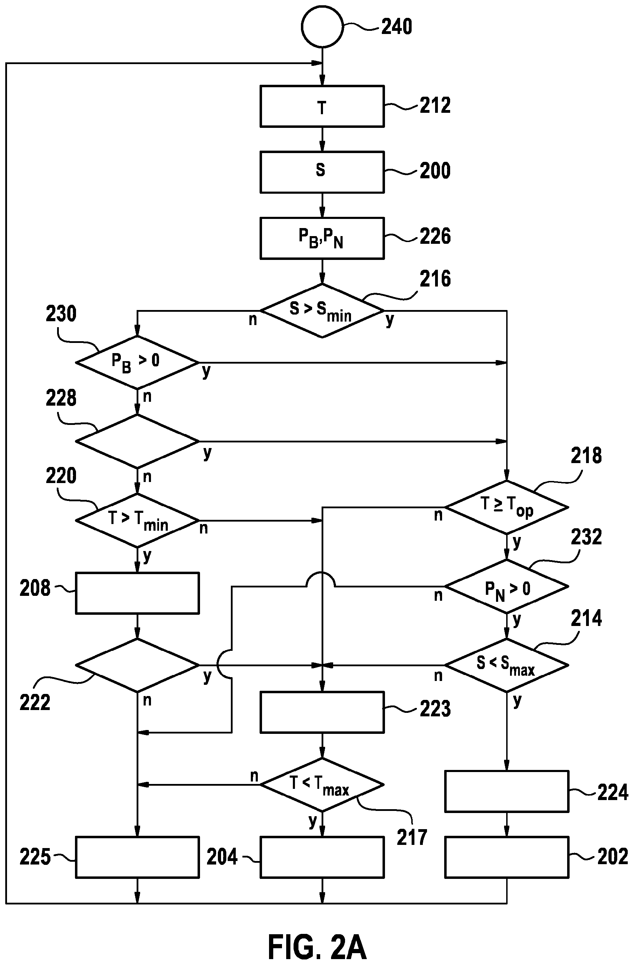

Im Folgenden soll anhand eines in Figur 2A gezeigten Flussdiagramms ein Verfahren zum Betreiben einer Hochtemperaturbatterie erläutert werden, bei dem z.B. eine die Hochtemperaturbatterie umfassende Energiespeichervorrichtung wie in Figur 1 gezeigt zum Einsatz kommen kann. Die Energiespeichervorrichtung ist mit einem Solarzellenmodul als Leistungsquelle, einem lokalen Verbraucher und einem Elektrizitätsnetz verbunden. Das Verfahren kann beispielsweise mittels eines Prozessors in der Energiespeichervorrichtung implementiert sein, der ein entsprechend dem Flussdiagramm aufgebautes Computerprogramm ausführt.

Nach dem Start 240 des Verfahrens wird in Schritt 212 eine gegenwärtige Temperatur T der Hochtemperaturbatterie ermittelt. In Schritt 200 wird ein Ladezustand S der Hochtemperaturbatterie ermittelt. In Schritt 226 werden eine von der Leistungsquelle gegenwärtig geleistete Bruttoleistung P_{B} und eine Nettoleistung P_{N} ermittelt, wobei die Nettoleistung P_{N} als gleich der Bruttoleistung P_{B} abzüglich einer vom lokalen Verbraucher entnommenen Verbrauchsleistung definiert sein soll. In Entscheidungsschritt 216 wird der in Schritt 200 ermittelte gegenwärtige Ladezustand S verglichen mit einem vorab festgelegten minimalen erlaubten Ladezustand Sₘᵢₙ der Hochtemperaturbatterie. Wenn der gegenwärtige Ladezustand S größer ist als der minimale erlaubte Ladezustand Sₘᵢₙ, springt das Verfahren zu Entscheidungsschritt 218. Ist dies nicht der Fall, wird in Entscheidungsschritt 230 überprüft, ob die Bruttoleistung P_{B} größer als Null ist, d.h. ob die Leistungsquelle aufgrund von Sonneneinstrahlung auf das Solarzellenmodul eine elektrische Leistung abgibt. Ist die Bruttoleistung P_{B} größer als Null, springt das Verfahren ebenfalls zu Entscheidungsschritt 218. Im gegenteiligen Fall wird in Entscheidungsschritt 228 überprüft, ob sich die Leistungsquelle in einem potentiellen Leistungszustand befindet, indem festgestellt wird, ob die gegenwärtige Tageszeit nach Sonnenaufgang und vor Sonnenuntergang am geographischen Ort des Solarzellenmoduls liegt. Ist dies der Fall, springt das Verfahren ebenfalls zu Entscheidungsschritt 218, anderenfalls zu Entscheidungsschritt 220.

In Entscheidungsschritt 218 wird die gegenwärtige Temperatur T der Batterie mit einer vorbestimmten Mindestbetriebstemperatur Tₒₚ der Hochtemperaturbatterie verglichen. Ist die Temperatur T größer oder gleich der Mindestbetriebstemperatur Tₒₚ, springt das Verfahren zu Entscheidungsschritt 232. Im umgekehrten Fall wird in Schritt 223 elektrisches Laden der Hochtemperaturbatterie abgeschaltet, sofern es nicht bereits abgeschaltet war. Anschließend wird in Entscheidungsschritt 217 die gegenwärtige Temperatur T mit einer vorbestimmten Höchsttemperatur Tₘₐₓ der Hochtemperaturbatterie verglichen. Wenn die Temperatur T kleiner ist als die Höchsttemperatur Tₘₐₓ, wird in Schritt 204 eine innere Heizung der Hochtemperaturbatterie eingeschaltet, sofern sie sich nicht bereits in eingeschaltetem Zustand befand. Wenn die Temperatur T nicht kleiner ist als die Höchsttemperatur Tₘₐₓ, wird in Schritt 225 die innere Heizung der Hochtemperaturbatterie abgeschaltet, sofern sie sich nicht bereits in abgeschaltetem Zustand befand. In beiden Fällen wird anschließend das Verfahren mit Schritt 212 neu begonnen.

Ist in Entscheidungsschritt 218 die Temperatur T dagegen größer oder gleich der Mindestbetriebstemperatur Tₒₚ, wird in Entscheidungsschritt 232 festgestellt, ob die in Schritt 226 ermittelte Nettoleistung P_{N} größer als Null ist. Falls die Nettoleistung P_{N} nicht größer als Null ist, springt das Verfahren zu Schritt 225. Falls dagegen in Entscheidungsschritt 232 die Nettoleistung P_{N} größer als Null ist, springt das Verfahren zu Entscheidungsschritt 214.

In Entscheidungsschritt 214 wird der gegenwärtige Ladezustand S verglichen mit einem vorab festgelegten maximalen Soll-Ladezustand Sₘₐₓ der Hochtemperaturbatterie. Wenn der gegenwärtige Ladezustand S geringer ist als der maximale Soll-Ladezustand Sₘₐₓ, wird in Schritt 224, in gleicher Weise wie in Schritt 225, die innere Heizung der Hochtemperaturbatterie abgeschaltet, sofern sie sich nicht bereits in abgeschaltetem Zustand befand. Anschließend wird in Schritt 202 das elektrische Laden der Hochtemperaturbatterie mit der Nettoleistung P_{N} eingeschaltet, sofern es sich nicht bereits in eingeschaltetem Zustand befand, und das Verfahren mit Schritt 212 neu begonnen. Wenn in Entscheidungsschritt 214 dagegen festgestellt wurde, dass der gegenwärtige Ladezustand S nicht geringer ist als der maximale Soll-Ladezustand Sₘₐₓ, springt das Verfahren zu Schritt 223.

In Entscheidungsschritt 220 wird die Temperatur T der Hochtemperaturbatterie verglichen mit einer vorab festgelegten Mindestruhetemperatur Tₘᵢₙ der Hochtemperaturbatterie. Wenn die Temperatur T nicht größer ist als die Mindestruhetemperatur Tₘᵢₙ, springt das Verfahren zu Schritt 223. Ist dagegen die Temperatur T größer ist als die Mindestruhetemperatur Tₘᵢₙ, wird in Schritt 208 eine zum Vorheizen der Hochtemperaturbatterie bis auf die Mindestbetriebstemperatur Tₒₚ erforderliche Vorheizdauer ermittelt. Im anschließenden Entscheidungsschritt 222 wird die in Schritt 208 ermittelte Vorheizdauer verglichen mit einer bis zum voraussichtlichen nächsten Leistungsbeginn der Leistungsquelle verbleibenden Zeitspanne. Ist die Vorheizdauer größer oder gleich der Zeitspanne bis zum Leistungsbeginn, springt das Verfahren zu Schritt 223, im umgekehrten Fall zu Schritt 225.

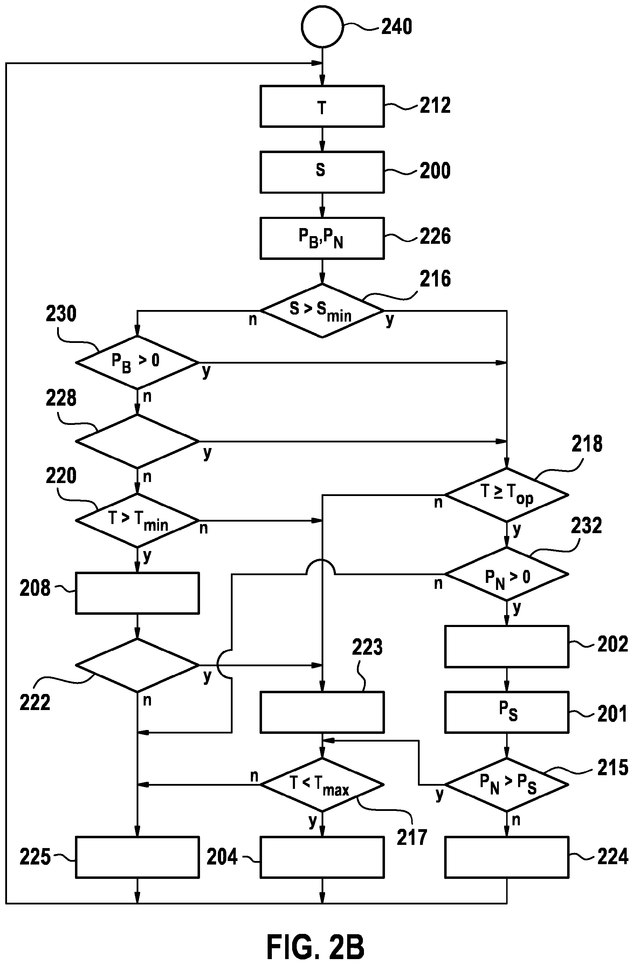

Figur 2B zeigt eine erfindungsgemäß abgewandelte Ausführungsform des Verfahrens zum Betreiben einer Hochtemperaturbatterie. Die Abweichungen gegenüber Figur 2A sollen im Folgenden erläutert werden. Falls in Entscheidungsschritt 232 festgestellt wurde, dass die in Schritt 226 ermittelte Nettoleistung P_{N} größer als Null ist, wird in Schritt 202 das elektrische Laden der Hochtemperaturbatterie eingeschaltet, falls es bis jetzt noch nicht eingeschaltet war. Dabei wird für das elektrische Laden auf die Nettoleistung P_{N} zurückgegriffen, insoweit die Hochtemperaturbatterie in der Lage ist, diese als elektrische Ladeleistung aufzunehmen. In Schritt 201 wird die gegenwärtige Ladeleistung P_{S} ermittelt, als Produkt des durch die Hochtemperaturbatterie fließenden Ladestroms und der an ihr anliegenden elektrischen Spannung. In Entscheidungsschritt 215 wird durch Vergleich ermittelt, ob die Nettoleistung P_{N} größer ist als die Ladeleistung Ps. Ist dies der Fall, springt das Verfahren zu Entscheidungsschritt 217, sodass für T<Tₘₐₓ in Entscheidungsschritt 217 anschließend in Schritt 204 die Heizung der Hochtemperaturbatterie eingeschaltet wird, wobei in diesem Fall die Heizung mit einer elektrischen Leistung betrieben wird, die gleich dem Differenzbetrag zwischen der elektrischen Ladeleistung und der Nettoleistung P_{N} ist. Im Falle, dass in Entscheidungsschritt 215 festgestellt wurde, dass die Nettoleistung P_{N} nicht größer ist als die Ladeleistung P_{S}, wird in Schritt 224 die Heizung der Hochtemperaturbatterie abgeschaltet, sofern sie zu diesem Zeitpunkt noch nicht abgeschaltet war.

In der Ausführungsform von Figur 2B wird somit die Hochtemperaturbatterie mit einem Anteil der Nettoleistung P_{N} elektrisch geladen, der der maximalen Soll-Ladeleistung entspricht, und mit dem verbleibenden Anteil der Nettoleistung P_{N} geheizt. Dies hat den Vorteil, dass auch eine sehr hohe Nettoleistung P_{N} noch vollständig - elektrisch und thermisch - von der Hochtemperaturbatterie aufgenommen werden kann. Da ferner eine Hochtemperaturbatterie sich im Allgemeinen umso schneller elektrisch laden lässt, je höher ihre Temperatur ist, kann mit dieser Ausführungsform die Hochtemperaturbatterie besonders rasch elektrisch aufgeladen werden.

## Patentansprüche

1. Verfahren zum Betreiben einer Hochtemperaturbatterie (100) an einer Leistungsquelle (105), mit folgenden Schritten:
Ermitteln (226) einer gegenwärtigen Quellenleistung (P_{N}) der Leistungsquelle (105);
Ermitteln (201; 200) einer Ladeleistung (P_{S}) der Hochtemperaturbatterie (100), welche die beim elektrischen Laden der Hochtemperaturbatterie (100) in ihrem gegenwärtigen Ladezustand aufnehmbare elektrische Leistung charakterisiert;
Vergleichen (215; 214) der gegenwärtigen Quellenleistung (P_{N}) mit der Ladeleistung (P_{S}); und
Heizen (204) der Hochtemperaturbatterie (100), wenn die gegenwärtige Quellenleistung (P_{N}) höher als die Ladeleistung (P_{S}) ist,
wobei die Quellenleistung (P_{N}), die in elektrischer Form nicht mehr von der Hochtemperaturbatterie (100) aufgenommen werden kann beziehungsweise soll, zum Heizen der Hochtemperaturbatterie (100) mittels eines Heizelementes (122) in der Hochtemperaturbatterie (100) verwendet wird.

2. Verfahren nach Anspruch 1, ferner umfassend folgende Schritte:
Ermitteln (212) einer gegenwärtigen Temperatur (T) der Hochtemperaturbatterie (100);
Vergleichen (218) der gegenwärtigen Temperatur (T) mit einer vorbestimmten Mindestbetriebstemperatur (Tₒₚ) der Hochtemperaturbatterie (100);
Ermitteln (200) eines gegenwärtigen Ladezustands (S) der Hochtemperaturbatterie (100); und
Vergleichen (216) des gegenwärtigen Ladezustands (S) mit einem minimalen erlaubten Ladezustand (Sₘᵢₙ) der Hochtemperaturbatterie (100);
wobei das Heizen (204) weiterhin erfolgt, wenn der gegenwärtige Ladezustand (S) höher als der minimale erlaubte Ladezustand (Sₘᵢₙ) ist und die gegenwärtige Temperatur (T) niedriger als die Mindestbetriebstemperatur (Tₒₚ) ist.

3. Verfahren nach Anspruch 2, ferner umfassend einen Schritt des Vergleichens (220) der gegenwärtigen Temperatur (T) mit einer vorbestimmten Mindestruhetemperatur (Tₘᵢₙ) der Hochtemperaturbatterie (100), wobei das Heizen (204) weiterhin erfolgt, wenn die gegenwärtige Temperatur (T) niedriger als die Mindestruhetemperatur (Tₘᵢₙ) ist.

4. Verfahren nach Anspruch 2 oder 3, ferner umfassend folgende Schritte:
Vorausbestimmen (206) einer Zeit bis zu einem Leistungsbeginn (317, 319) der Leistungsquelle (105);
Ermitteln (208) einer Vorheizdauer (308), welche zum Heizen der Hochtemperaturbatterie (100) auf die Mindestbetriebstemperatur (Tₒₚ) erforderlich ist; und
Vergleichen (222) der Vorheizdauer (308) mit der Zeit bis zum Leistungsbeginn (317, 319);
wobei das Heizen (204) weiterhin erfolgt, wenn die Vorheizdauer (308) kürzer als die Zeit bis zum Leistungsbeginn (317) ist.

5. Verfahren nach Anspruch 4, wobei die Leistungsquelle (105) einen Licht-Elektrizitäts-Wandler (106) aufweist, und das Vorausbestimmen (206) durch Ermitteln eines Sonnenscheinbeginns (317, 319) auf den Licht-Elektrizitäts-Wandler (106) erfolgt.

6. Verfahren nach Anspruch 5, wobei das Ermitteln des Sonnenscheinbeginns (319) ein Zugreifen auf eine Wettervorhersage für einen geographischen Ort des Licht-Elektrizitäts-Wandlers (106) umfasst.

7. Energiespeichervorrichtung (104) mit einer mit einer Leistungsquelle (105) verbindbaren Hochtemperaturbatterie (100), einem Heizelement (122) in der Hochtemperaturbatterie (100) und einer Steuervorrichtung (102) zum Betreiben der Hochtemperaturbatterie (100) mit:
einem Quellenleistungsermittler (198; 108) zum Ermitteln einer gegenwärtigen Quellenleistung (P_{N}) der Leistungsquelle (105);
einem Ladeleistungsermittler (197) zum Ermitteln einer Ladeleistung (P_{S}) der Hochtemperaturbatterie (100), welche die beim elektrischen Laden der Hochtemperaturbatterie (100) in ihrem gegenwärtigen Ladezustand aufnehmbare elektrische Leistung charakterisiert;
einem Leistungsvergleicher (199), welcher die gegenwärtige Quellenleistung (P_{N}) mit der Ladeleistung (Ps) vergleicht; und
einer Heizsteuerung (120), welche die Hochtemperaturbatterie (100) mittels des Heizelementes (122) heizt, wenn die gegenwärtige Quellenleistung (P_{N}) größer als die Ladeleistung (P_{S}) ist, wobei die Steuervorrichtung (102) so ausgelegt ist, dass die Quellenleistung (P_{N}), die in elektrischer Form nicht mehr von der Hochtemperaturbatterie (100) aufgenommen werden kann beziehungsweise soll, zum Heizen der Hochtemperaturbatterie (100) mittels des Heizelementes (122) verwendet wird.

8. Energiespeichervorrichtung (104) nach Anspruch 7, wobei die Steuervorrichtung (102) ferner umfasst:
einen Temperaturermittler (118), welcher eine gegenwärtige Temperatur (T) der Hochtemperaturbatterie (100) ermittelt;
einen Temperaturvergleicher (119), welcher die gegenwärtige Temperatur (T) mit einer vorbestimmten Mindestbetriebstemperatur (Tₒₚ) der Hochtemperaturbatterie (100) vergleicht;
einen Ladezustandsermittler (108), welcher einen gegenwärtigen Ladezustand (S) der Hochtemperaturbatterie (100) ermittelt; und
einen Ladezustandsvergleicher (109), welcher den gegenwärtigen Ladezustand (S) mit einem minimalen erlaubten Ladezustand (Sₘᵢₙ) der Hochtemperaturbatterie (100) vergleicht;
wobei die Heizsteuerung (120) ausgebildet ist, weiterhin zu heizen, wenn der gegenwärtige Ladezustand (S) höher als der minimale erlaubte Ladezustand (Sₘᵢₙ) ist und die gegenwärtige Temperatur (T) niedriger als die Mindestbetriebstemperatur (Tₒₚ) ist.

## Claims

1. Method for operating a high-temperature battery (100) on a power source (105), having the following steps:
ascertaining (226) a present source power (P_{N}) of the power source (105);
ascertaining (201; 200) a charging power (Ps) of the high-temperature battery (100), which characterizes the electric power drawable during electric charging of the high-temperature battery (100) in its present state of charge;
comparing (215; 214) the present source power (P_{N}) with the charging power (Ps); and
heating (204) the high-temperature battery (100) if the present source power (P_{N}) is higher than the charging power (P_{S}),
wherein the source power (P_{N}) that is no longer able or supposed to be absorbed by the high-temperature battery (100) in electrical form is used for heating the high-temperature battery (100) by means of a heating element (122) in the high-temperature battery (100).

2. Method according to Claim 1, further comprising the following steps:
ascertaining (212) a present temperature (T) of the high-temperature battery (100);
comparing (218) the present temperature (T) with a predetermined minimum operating temperature (Tₒₚ) of the high-temperature battery (100);
ascertaining (200) a present state of charge (S) of the high-temperature battery (100); and
comparing (216) the present state of charge (S) with a minimum permitted state of charge (Sₘᵢₙ) of the high-temperature battery (100);
wherein the heating (204) is furthermore effected if the present state of charge (S) is higher than the minimum permitted state of charge (Sₘᵢₙ) and the present temperature (T) is lower than the minimum operating temperature (Tₒₚ) .

3. Method according to Claim 2, further comprising a step of comparing (220) the present temperature (T) with a predetermined minimum idle temperature (Tₘᵢₙ) of the high-temperature battery (100), wherein the heating (204) is furthermore effected if the present temperature (T) is lower than the minimum idle temperature (Tmin).

4. Method according to Claim 2 or 3, further comprising the following steps:
predetermining (206) a time before a beginning of output (317, 319) from the power source (105);
ascertaining (208) a preheating period (308) required for heating the high-temperature battery (100) to the minimum operating temperature (Tₒₚ); and
comparing (222) the preheating period (308) with the time before the beginning of output (317, 319);
wherein the heating (204) is furthermore effected if the preheating period (308) is shorter than the time before the beginning of output (317).

5. Method according to Claim 4, wherein the power source (105) has a photoelectric transducer (106), and the predetermining (206) is effected by ascertaining a beginning of sunshine (317, 319) onto the photoelectric transducer (106).

6. Method according to Claim 5, wherein the ascertaining of the beginning of sunshine (319) comprises accessing a weather forecast for a geographical area of the photoelectric transducer (106) .

7. Energy storage apparatus (104) having a high-temperature battery (100) connectable to a power source (105), a heating element (122) in the high-temperature battery (100) and a control apparatus (102) for operating the high-temperature battery (100) having:
a source power ascertainer (198; 108) for ascertaining a present source power (P_{N}) of the power source (105);
a charging power ascertainer (197) for ascertaining a charging power (P_{S}) of the high-temperature battery (100), which characterizes the electric power drawable during electric charging of the high-temperature battery (100) in its present state of charge;
a power comparator (199) that compares the present source power (P_{N}) with the charging power (Ps); and
a heating controller (120) that heats the high-temperature battery (100) by means of the heating element (122) if the present source power (P_{N}) is greater than the charging power (P_{S}),
wherein the control apparatus (102) is designed such that the source power (P_{N}) that is no longer able or supposed to be absorbed by the high-temperature battery (100) in electrical form is used for heating the high-temperature battery (100) by means of the heating element (122).

8. Energy storage apparatus (104) according to Claim 7, wherein the control apparatus (102) further comprises:
a temperature ascertainer (118) that ascertains a present temperature (T) of the high-temperature battery (100);
a temperature comparator (119) that compares the present temperature (T) with a predetermined minimum operating temperature (Tₒₚ) of the high-temperature battery (100);
a state of charge ascertainer (108) that ascertains a present state of charge (S) of the high-temperature battery (100); and
a state of charge comparator (109) that compares the present state of charge (S) with a minimum permitted state of charge (Sₘᵢₙ) of the high-temperature battery (100);
wherein the heating controller (120) is designed to continue to heat if the present state of charge (S) is higher than the minimum permitted state of charge (Sₘᵢₙ) and the present temperature (T) is lower than the minimum operating temperature (Tₒₚ).

## Revendications

1. Procédé pour faire fonctionner une batterie à haute température (100) sur une source de puissance (105), comprenant les étapes suivantes :
la détermination (226) d'une puissance de source actuelle (P_{N}) de la source de puissance (105) ;
la détermination (201 ; 200) d'une puissance de charge (P_{S}) de la batterie à haute température (100), qui caractérise la puissance électrique pouvant être absorbée lors de la charge électrique de la batterie à haute température (100) dans son état de charge actuel ;
la comparaison (215 ; 214) de la puissance de source actuelle (P_{N}) à la puissance de charge (P_{S}) ; et
le chauffage (204) de la batterie à haute température (100) lorsque la puissance de source actuelle (P_{N}) est supérieure à la puissance de charge (P_{S}),
dans lequel la puissance de source (P_{N}) qui, sous forme électrique, ne peut plus être absorbée par la batterie à haute température (100), est utilisée pour chauffer la batterie à haute température (100) au moyen d'un élément chauffant (122) dans la batterie à haute température (100) .

2. Procédé selon la revendication 1, comprenant en outre les étapes suivantes :
la détermination (212) d'une température actuelle (T) de la batterie à haute température (100) ;
la comparaison (218) de la température actuelle (T) à une température de fonctionnement minimale prédéterminée (Tₒₚ) de la batterie à haute température (100) ;
la détermination (200) d'un état de charge actuel (S) de la batterie à haute température (100) ; et
la comparaison (216) de l'état de charge actuel (S) à un état de charge minimal autorisé (Sₘᵢₙ) de la batterie à haute température (100) ;
dans lequel le chauffage (204) se poursuit lorsque l'état de charge actuel (S) est supérieur à l'état de charge minimal autorisé (Sₘᵢₙ) et lorsque la température actuelle (T) est inférieure à la température de fonctionnement minimale (Tₒₚ) .

3. Procédé selon la revendication 2, comprenant en outre une étape de comparaison (220) de la température actuelle (T) à une température minimale de repos prédéterminée (Tₘᵢₙ) de la batterie à haute température (100), dans lequel le chauffage (204) se poursuit lorsque la température actuelle (T) est inférieure à la température minimale de repos (Tₘᵢₙ).

4. Procédé selon la revendication 2 ou 3, comprenant en outre les étapes suivantes :
la détermination préalable (206) d'un temps jusqu'à un début de fourniture de puissance (317, 319) de la source de puissance (105) ;
la détermination (208) d'une période de préchauffage (308) nécessaire pour chauffer la batterie à haute température (100) à la température de fonctionnement minimale (Tₒₚ) ; et
la comparaison (222) de la durée de préchauffage (308) au temps s'écoulant jusqu'au début de fourniture de puissance (317, 319) ;
dans lequel le chauffage (204) se poursuit lorsque la durée de préchauffage (308) est plus courte que le temps s'écoulant jusqu'au début de fourniture de puissance (317).

5. Procédé selon la revendication 4, dans lequel la source de puissance (105) comporte un convertisseur lumière-électricité (106), et la prédétermination (206) est effectuée en déterminant un début de rayonnement solaire (317, 319) sur le convertisseur lumière-électricité (106).

6. Procédé selon la revendication 5, dans lequel la détermination du début de rayonnement solaire (319) comprend un accès à une prévision météorologique pour un emplacement géographique du convertisseur lumière-électricité (106).

7. Dispositif de stockage d'énergie (104) comprenant une batterie à haute température (100) pouvant être connectée à une source de puissance (105), un élément chauffant (122) dans ladite batterie à haute température (100), et un dispositif de commande (102) pour faire fonctionner la batterie à haute température (100), comprenant :
un dispositif de détermination de puissance de source (198 ; 108) pour déterminer une puissance de source actuelle (P_{N}) de la source de puissance (105) ;
un dispositif de détermination de puissance de charge (197) pour déterminer une puissance de charge (Ps) de la batterie à haute température (100), qui caractérise la puissance électrique pouvant être absorbée lors de la charge électrique de la batterie à haute température (100) dans son état de charge actuel ;
un comparateur de puissance (199) qui compare la puissance de source actuelle (P_{N}) à la puissance de charge (P_{S}) ; et
une commande de chauffage (120) qui chauffe la batterie à haute température (100) au moyen de l'élément chauffant (122) lorsque la puissance de source actuelle (P_{N}) est supérieure à la puissance de charge (P_{S}),
dans lequel le dispositif de commande (102) est conçu de manière à ce que la puissance de source (P_{N}) qui, sous forme électrique, ne peut plus être absorbée par la batterie à haute température (100), soit utilisée pour chauffer la batterie à haute température (100) au moyen de l'élément chauffant (122).

8. Dispositif de stockage d'énergie (104) selon la revendication 7, dans lequel le dispositif de commande (102) comprend en outre :
un détecteur de température (118) qui détermine une température actuelle (T) de la batterie à haute température (100) ;
un comparateur de température (119) qui compare la température actuelle (T) à une température de fonctionnement minimale prédéterminée (Tₒₚ) de la batterie à haute température (100) ;
un dispositif de détermination d'état de charge (108) qui détermine un état de charge actuel (S) de la batterie à haute température (100) ; et
un comparateur d'état de charge (109) qui compare l'état de charge actuel (S) à un état de charge minimal admissible (Sₘᵢₙ) de la batterie à haute température (100) ;
dans lequel la commande de chauffage (120) est conçue pour chauffer davantage lorsque l'état de charge actuel (S) est supérieur à l'état de charge minimal autorisé (Sₘᵢₙ) et lorsque la température actuelle (T) est inférieure à la température de fonctionnement minimale autorisée (Tₒₚ) .
